# EUROPÄISCHE PATENTSCHRIFT

(11) **EP 2 780 552 B1**
(45) Veröffentlichungstag und Bekanntmachung des Hinweises auf die Patenterteilung: **06.04.2016**
(21) Anmeldenummer: 12788426.0
(22) Anmeldetag: 06.11.2012
(51) Int. Cl.: F01D 5/22, F01D 5/28, B23K 1/00, C23C 28/00

(54) **PANZERUNG VON DICHTFINS VON TIAL-SCHAUFELN DURCH INDUKTIVES AUFTRAGSLÖTEN VON HARTSTOFFPARTIKELN**
ARMORING SEALING FINS OF TIAL VANES BY INDUCTION BRAZING HARD-MATERIAL PARTICLES
BLINDAGE D'AILETTES D'ÉTANCHÉITÉ D'AUBES EN TIAL PAR DÉPÔT DE PARTICULES DE MATÉRIAU DUR PAR BRASAGE PAR INDUCTION

(30) Priorität: 17.11.2011 DE 102011086524
(43) Veröffentlichungstag der Anmeldung: 24.09.2014
(73) Patentinhaber: MTU Aero Engines GmbH, 80995 München (DE)
(72) Erfinder: DANIELS, Bernd, 82194 Gröbenzell (DE); RICHTER, Karl-Hermann, 85229 Markt Indersdorf (DE)
(86) Internationale Anmeldenummer: PCT/DE2012/001068
(87) Internationale Veröffentlichungsnummer: WO 2013/071909

(56) Entgegenhaltungen:
- WO-A1-2008/135803
- DE-A1-102009 008 887
- GB-A- 2 294 951

## Beschreibung

### HINTERGRUND DER ERFINDUNG

### GEBIET DER ERFINDUNG

Die vorliegende Erfindung betrifft ein Verfahren zur Panzerung von TiAl-Schaufeln von Strömungsmaschinen sowie eine entsprechende TiAl-Schaufel.

### STAND DER TECHNIK

Bei Strömungsmaschinen, wie beispielsweise stationären Gasturbinen oder Flugtriebwerken, sind zum Teil Bauteile vorgesehen, die sich mit hohen Geschwindigkeiten relativ zu anderen Bauteilen bewegen und diese zumindest während einer Einlaufzeit berühren, sodass sich ein schleifender Kontakt ergibt. Aus diesem Grund müssen derartige Bauteile mit Panzerungen versehen werden, um die Bauteile vor Verschleiß zu schützen. Dies gilt beispielsweise auch für Dichtrippen, sogenannte Dichtfins, die an Laufschaufeln von entsprechenden Strömungsmaschinen vorgesehen sind.

Solche und andere Verfahren zum Auftragen von Panzerungen auf Triebswerksschaufeln sind beispielsweise aus den Druckschriften GB 2 294 951 A, WO 2008/135803 A1 und DE 10 2009 008 887 A1 bekannt.

Bei der Aufbringung einer entsprechenden Panzerung besteht jedoch die Problematik, dass für die Aufbringung der Panzerung möglicherweise Prozesstemperaturen notwendig sind, die der Grundwerkstoff des zu panzernden Bauteils nicht ohne Weiteres erträgt. Dies gilt beispielsweise auch für Schaufeln von Strömungsmaschinen, die aus TiAl-Werkstoffen gefertigt sind. Derartige Werkstoffe, die überwiegend aus Titan und Aluminium zur Bildung von intermetallischen Phasen, wie Gamma TiAl, gebildet sind, können aufgrund der eingeschränkten Temperaturbeständigkeit nur in begrenzter Weise mit entsprechenden Panzerungen versehen werden.

Aus dem Stand der Technik ist es beispielsweise bekannt, Panzerungen durch Plasmaspritzen aufzubringen, wobei durch einen lokal begrenzten Auftrag die Temperaturbelastung des TiAl-Werkstoffs ausreichend niedrig gehalten werden kann. Allerdings bedarf es entsprechend aufwändiger Abdeckvorrichtungen, um nur in einem gewünschten, lokal begrenzten Bereich eine Spritzschicht aufzubringen. Zudem weisen derartige plasmagespritzte Hartstoffschichten Probleme hinsichtlich der Hafteigenschaften auf, sodass nickelhaltige Zwischenschichten vorgesehen werden müssen, die den Aufwand weiter erhöhen und zudem zur Ausbildung von spröden Nickel-Titan-Phasen führen können.

Insbesondere das Aufbringen der Panzerung auf Dichtfins ist aufgrund der geometrischen Verhältnisse und der Dimensionen schwierig.

Aus der DE 10 2007 056 454 A1 ist allgemein ein Verfahren zum Beschichten von Bauteilen bekannt, bei welchem ein Gemisch aus einem Lotwerkstoff und einem Beschichtungsmaterial mittels kinetischem Kaltgasspritzen aufgebracht und anschließend induktiv erwärmt wird. Allerdings ist auch hier eine aufwändige Abdeckung von Bereichen, die nicht beschichtet werden sollen, im Zusammenhang mit dem kinetischen Kaltgasspritzen nötig, auch wenn durch das kinetische Kaltgasspritzen die Temperaturbelastung niedrig gehalten werden kann.

### OFFENBARUNG DER ERFINDUNG

### AUFGABE DER ERFINDUNG

Es ist deshalb Aufgabe der vorliegenden Erfindung ein Verfahren zur Panzerung von TiAl-Schaufeln und insbesondere von Dichtfins von TiAl-Schaufeln sowie entsprechend gepanzerte TiAI-Schaufeln bereitzustellen, bei denen die Probleme des Standes der Technik beseitigt bzw. verringert sind und insbesondere eine effiziente Herstellung mit geringer Temperaturbelastung für den Grundwerkstoff ermöglicht wird, sodass die Bauteileigenschaften der TiAl-Schaufeln möglichst nicht verändert werden.

### TECHNISCHE LÖSUNG

Diese Aufgabe wird gelöst durch ein Verfahren mit den Merkmalen des Anspruchs 1 sowie eine TiAl-Schaufel mit den Merkmalen des Anspruchs 12. Vorteilhafte Ausgestaltungen sind Gegenstand der abhängigen Ansprüche.

Die Erfindung geht aus von der Erkenntnis, dass gerade für TiAl-Schaufeln eine löttechnische Aufbringung von Hartstoffen durch induktives Erwärmen möglich ist, ohne dass die Temperaturbelastung für den TiAl-Werkstoff zu hoch ist, da bei einer induktiven Erwärmung nur ein lokal sehr begrenzter Bereich erwärmt werden muss.

Insbesondere kann ein derartiges Verfahren auch für die schwierig zu beschichtenden Dichtfins bei TiAl-Schaufeln eingesetzt werden.

Unter TiAl-Schaufeln bzw. TiAl-Werkstoffen, werden bei der vorliegenden Erfindung Materialien verstanden, die überwiegend aus Titan und Aluminium bzw. mit den größten Bestandteilen aus Titan und Aluminium gebildet sind. Insbesondere werden hierunter Werkstoffe verstanden, die in ihrem Gefüge zu einem großen Anteil intermetallische Phasen wie γ-TiAl oder α₂-Ti₃Al aufweisen. Die entsprechenden Werkstoffe können mit anderen Elementen, wie beispielsweise Niob, Mangan oder dergleichen legiert sein.

Die Lote, die für die löttechnische Aufbringung von Hartstoffen verwendet werden können, umfassen Ti - Basis - Lote, Ti60CuNi, Ti70CuNi, Ni - Basis - Lote, AMS47XX, AMS4775, AMS4776, AMS4777, AMS4778, AMS4779 und AMS4782, wobei AMS bedeutet: Aerospace Material specification. Unter Ti - Basis - Lot wird hierbei ein Lot verstanden, welches, wie beispielsweise Ti60CuNi oder Ti70CuNi, einen überwiegenden Anteil an Titan aufweist oder Titan den größten Bestandteil darstellt. Bei Ti60CuNi oder Ti70CuNi liegt der Anteil des Titan bei 60 bzw. 70 Gew.%.

Darüber hinaus können Ni - Basis - Lote eingesetzt werden, bei denen wiederum Nickel den überwiegenden Anteil oder den größten Bestandteil darstellt. Bekannte Nickellote werden mit den Bezeichnungen AMS47XX, wobei XX als Platzhalter für Ziffern zwischen 1 und 9 steht, vertrieben. Besondere Beispiele, die gut für die vorliegende Erfindung geeignet sind, sind AMS4775 mit 14 Gew.% Chrom, 4,5 Gew.% Eisen, 4,5 Gew.% Silizium, 3,1 Gew.% Bor und 0,7 Gew.% Kohlenstoff und dem Rest Nickel sowie AMS4776 mit 14 Gew.% Chrom, 4,5 Gew.% Eisen, 4,5 Gew.% Silizium, 3,1 Gew.% Bor und dem Rest Nickel, ASM4777 mit 7 Gew.% Chrom, 3 Gew.% Eisen, 4,1 Gew.% Silizium, 3 Gew.% Bor und dem Rest Nickel, AMS4778 mit 4,5 Gew.% Silizium, 2,9 Gew.% Bor und dem Rest Nickel, AMS4779 mit 3,5 Gew.% Silizium, 1,9 Gew.% Bor und dem Rest Nickel sowie AMS4782 mit 19 Gew.% Chrom, 10 Gew.% Silizium und dem Rest Nickel.

Die Hartstoffe, die in einer Mischung aus mindestens einem Hartstoff und mindestens einem Lot auf die TiAl-Schaufel aufgebracht werden, können Aluminiumoxid, Bornitrid, kubisches Bornitrid, Siliziumkarbid und Titankarbid umfassen.

Die Mischung aus Hartstoff und Lot kann im Verhältnis von 1:1 bis 9:1 Hartstoff zu Lot gewählt werden.

Zur Aufbringung des Gemisches aus Hartstoff und Lot kann ein Lotformteil aus entsprechenden Partikeln aus Hartstoff und Lot gesintert werden, welches dann beispielsweise über einen Klebstoff oder durch eine Schweißverbindung, wie beispielsweise eine Punktschweißverbindung, insbesondere Widerstandspunktschweißverbindung auf der TiAl-Schaufel angeordnet werden kann, um anschließend durch induktive Erwärmung aufgelötet zu werden. Neben vorgesinterten Lotformteilen können auch entsprechende Lottapes Verwendung finden, die als streifenförmige Bauteile ausgebildet sein können und anstelle einer Sinterverbindung der Pulverpartikel aus Hartstoff und Lot ein Bindemittel aufweisen können, um die Pulverpartikel in Tape-Form zu halten. Ein derartiges Lottape kann beispielsweise auch über einen Klebstoff auf der TiAl-Schaufel angeordnet werden, um anschließend durch Temperatureinwirkung aufgelötet zu werden.

Ferner ist es möglich das Gemisch aus Hartstoffund Lot in Form einer Paste aufzubringen, welche zusätzlich zu den Partikeln aus Hartstoff und Lot einen organischen Binder umfasst, der die Paste in einem fließfähigen Zustand zusammenhält, sodass die Paste durch Streichen oder Bedrucken auf der TiAl-Schaufel aufgebracht werden kann. Der organische Binder einer Lötpaste kann einen Anteil von 5 bis 30 Gew.%, insbesondere 10 bis 20 Gew.% am Gesamtgewicht der Lötpaste aufweisen, wobei die Anteile an Lot und Hartstoff wie oben angegeben in einem Verhältnis von 1:1 bis 9:1 von Hartstoff zu Lot vorliegen können.

Die Lotformteile, Löttapes oder die Lötpaste können bei Temperaturen im Bereich von 900 C° bis 1100 C°, insbesondere 940 C° bis 1060 C°, vorzugsweise im Bereich von 960 C° bis 1020 C° auf die TiAl-Schaufel aufgelötet werden, wobei Haltezeiten der entsprechenden Temperaturen im Bereich von 30 Sekunden bis zehn Minuten, vorzugsweise im Bereich von einer Minute bis zwei Minuten gewählt werden können.

Nach dem Aufschmelzen des Lots kann die aufgelötete Mischung kontrolliert mit Abkühlraten im Bereich von 10 Kelvin pro Minute bis 100 Kelvin pro Minute, vorzugsweise oberhalb des Spröd-Duktil-Übergangs abgekühlt werden. Auch eine unkontrollierte Abkühlung ist denkbar.

### KURZBESCHREIBUNG DER FIGUREN

Die beigefügten Zeichnungen zeigen in rein schematischer Weise in
- Fig. 1: eine Darstellung des erfindungsgemäßen Auflötens einer Panzerung mittels eines vorgesinterten Lotformteils, und in
- Fig. 2: eine Darstellung des Auflötens einer Lötpaste zur erfindungsgemäßen Herstellung einer Panzerung auf einem Dichtfin einer TiAl-Schaufel.

### AUSFÜHRUNGSBEISPIELE

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Allerdings ist die Erfindung nicht auf diese Ausführungsbeispiele beschränkt.

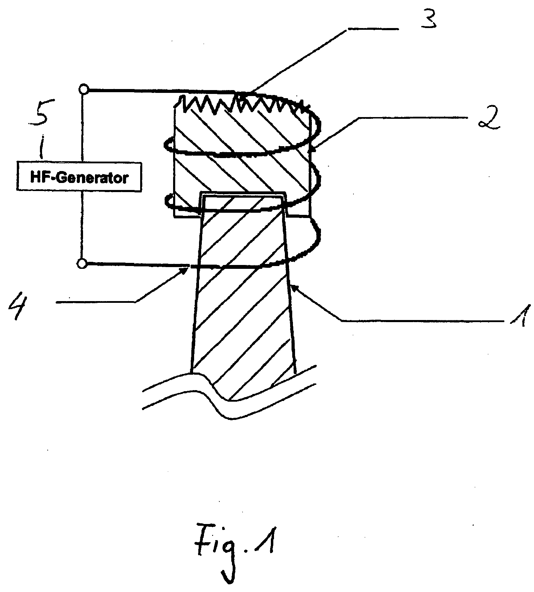

Die Fig. 1 zeigt eine Querschnittsansicht durch einen Teil einer TiAl-Schaufel, wobei in der Fig. 1 lediglich das Ende einer Dichtrippe bzw. eines Dichtfins 1 gezeigt ist. Das Ende der Dichtrippe 1, welches zur Abdichtung gegen einen stehenden Körper der Strömungsmaschine anliegt und somit im Schleifkontakt ist, soll durch eine entsprechende Panzerung eine verbesserte Verschleißbeständigkeit aufweisen.

Zu diesem Zweck ist an dem Ende des Dichtfins 1 ein vorgesintertes Lotformteil 2 angeordnet, welches aus einer Mischung aus mindestens einem Hartstoff und einem Lot gebildet ist.

Das Lotformteil 2 ist aus einer Pulvermischung aus Hartstoff - Partikeln und Lot Partikeln in eine gewünschte Form gesintert worden, wie sie beispielsweise in der Fig. 1 im Querschnitt dargestellt ist. Exemplarisch sind im Bereich der Dichtfläche des Dichtfins 1 hervorstehende Hartstoffpartikel 3 dargestellt.

Nach dem Anordnen des Lotformteils 2 wird das Lotformteil 2 sowie der Endbereich des Dichtfins 1, an dem das Lotformteil 2 angeordnet ist, induktiv erwärmt, wozu eine Spule 4 mit einem Hochfrequenzgenerator 5 zur Erzeugung hochfrequenter Magnetwechselfelder angeordnet ist. Durch eine gezielte Anordnung der Spule 4 im zu erwärmenden Bereich des Dichtfins 1 und des Lotformteils 2 ist eine gezielte Wärmeeinbringung begrenzt auf den Lötbereich möglich. Das Löten erfolgt je nach Lotwerkstoff unter Vakuum oder Schutzgas.

Bei Verwendung eines Lotformteils 2 mit beispielsweise 50% Anteil Aluminiumoxidpartikeln und 50% Anteil des Lotwerkstoffs AMS4777 mit 7 Gew.% Chrom, 3 Gew.% Eisen, 4,1 Gew.% Silizium, 3 Gew.% Bor and Rest Nickel wird das Lotformteil 2 und das Ende des Dichtfins 1 auf eine Temperatur im Bereich von 1000 C° bis 1080 C°, vorzugsweise 1020 C° bis 1060 C° aufgeheizt und für ein bis zwei Minuten bei dieser Temperatur gehalten. Danach wird die Leistung des Hochfrequenzgenerators 5 so abgesenkt, dass eine geregelte Abkühlung mit einer Abkühlgeschwindigkeit im Bereich von 50 Kelvin pro Minute erreicht wird. Erforderlichenfalls kann eine zusätzliche Kühlung, beispielsweise durch einen Ventilator oder dergleichen zusätzlich angewandt werden. Die Nutzung eines Ventilators ist prinzipiell nur möglich, falls in Ar-Atmosphäre gelötet wird.

Durch die Wärmebehandlung schmilzt der Lotanteil des Lotformteils 2 und bildet mit den Hartstoffpartikeln 3 sowie dem TiAl-Grundwerkstoff der TiAl-Schaufel bzw. des Dichtfins 1 einen festen stoffschlüssigen Verbund, sodass die Hartstoffpartikel sicher in einer Matrix aus dem Lotwerkstoff enthalten sind.

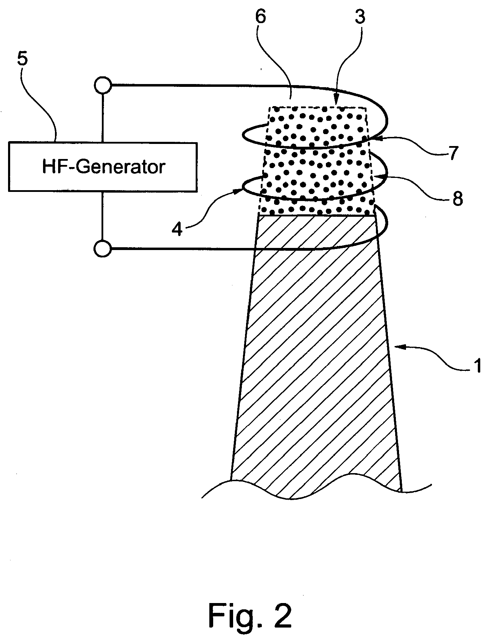

Die Fig. 2 zeigt eine alternative Ausführungsform, bei welcher wiederum eine Dichtfin einer TiAl-Schaufel mittels induktiver Erwärmung unter Verwendung einer Spule 4 und eines Hochfrequenzgenerators 5 gepanzert wird. Allerdings wird die Panzerung nicht wie im Ausführungsbeispiel der Fig. 1 durch ein Lotformteil 2 aufgebracht, sondern am Dichtfin 1 wird eine Lötpaste 6 aufgetragen, die wiederum Hartstoffpartikel sowie Partikel aus einem Lot 7 umfasst. Diese Pulverpartikel aus Hartstoff 3 und Lot 7 sind in der Lötpaste jedoch in einem organischen Binder 8 aufgenommen, der es ermöglicht die Lötpaste 6 beispielsweise durch Bestreichen auf dem Dichtfin 1 aufzubringen.

Nach dem Aufbringen der Lötpaste 6 wird der Lötbereich mit der Lötpaste 6 und dem Ende der Dichtfin 1, auf dem die Lötpaste aufgebracht ist, entsprechend induktiv erwärmt, sodass zunächst der Binder 8 zersetzt wird und/oder verdampft und anschließend das aufgeschmolzene Lot 7 die Haststoffpartikel 3 umschließt und stoffschlüssig mit dem Dichtfin 1 verbindet.

Die Löttemperaturen und Haltedauern können ähnlich wie beim Ausführungsbeispiel der Fig. 1 gewählt werden, wobei jedoch eine längere Aufheizperiode zum Zersetzten und/oder Verdampfen des Binders vorgesehen werden kann.

Obwohl die vorliegende Erfindung anhand der Ausführungsbeispiele detailliert beschrieben worden ist, ist für den Fachmann klar, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen gewählt werden. Die vorliegende Erfindung offenbart sämtliche Kombinationen der vorgestellten Merkmale.

## Patentansprüche

1. Verfahren zur Panzerung von TiAl - Schaufeln von Strömungsmaschinen, welches die Schnitte umfasst:
- Bereitstellung einer TiAl - Schaufel,
- Aufbringen einer Mischung aus mindestens einem Hartstoff und mindestens einem Lot auf die TiAl-Schaufel, wobei das Lot ein Ni-Basis-Lot ist, **gekennzeichnet durch**:
- Auflöten der Mischung auf die TiAl- Schaufel **durch** induktives Erwärmen.

2. Verfahren nach Anspruch 1,
**dadurch gekennzeichnet, dass**
die Panzerung auf Dichtfins der TiAl - Schaufel aufgebracht wird.

3. Verfahren nach einem der vorhergehenden Ansprüche,
**dadurch gekennzeichnet, dass**
der Hartstoff ausgewählt wird aus der Gruppe, die Aluminiumoxid, Bornitrid, kubisches Bornitrid, Titannitrid, Siliziumkarbid, Wolframkarbid und Titankarbid umfasst.

4. Verfahren nach einem der vorhergehenden Ansprüche,
**dadurch gekennzeichnet, dass**
die Mischung aus Hartstoff und Lot im Verhältnis von 1:1 bis 9:1 zwischen Hartstoffen und Lot gewählt wird.

5. Verfahren nach einem der vorhergehenden Ansprüche,
**dadurch gekennzeichnet, dass**
die Mischung aus Lot und Hartstoff in einer Form auf die TiAl - Schaufel aufgebracht wird, die ausgewählt wird aus der Gruppe, die das Aufbringen in Form von Lottape, von vorgesinterten Lotformteilen und Lotpaste umfasst.

6. Verfahren nach Anspruch 5,
**dadurch gekennzeichnet, dass**
das Lotformteil oder das Lottape durch einen Klebstoff oder durch Schweißen, insbesondere Punktschweißen, vorzugsweise Widerstandspunktschweißen vor dem Lötprozess auf der Ti-Al - Schaufel fixiert werden.

7. Verfahren nach Anspruch 5,
**dadurch gekennzeichnet, dass**
die Lötpaste zusätzlich einen organischen Binder umfasst und durch Prozesse zur Applikation von fließfähigen Materialien, insbesondere durch Streichen oder Bedrucken, auf der TiAI-Schaufel aufgebracht wird.

8. Verfahren nach Anspruch 7,
**dadurch gekennzeichnet, dass**
der organische Binder mit einem Anteil von 5 Gew.% bis 30 Gew.%, insbesondere 10 Gew.% bis 20 Gew.% am Gesamtgewicht der Lötpaste gewählt wird.

9. Verfahren nach einem der vorhergehenden Ansprüche,
**dadurch gekennzeichnet, dass**
die Löttemperaturen im Bereich von 900°C bis 1100°C, insbesondere 940°C bis 1060°C, vorzugsweise im Bereich von 960°C bis 1020°C gewählt werden.

10. Verfahren nach einem der vorhergehenden Ansprüche,
**dadurch gekennzeichnet, dass**
die Haltezeiten, mit denen die Mischung aus Hartstoff und Lot auf Löttemperatur gehalten werden, im Bereich von 30 s bis 10 min, vorzugsweise im Bereich von 1 min bis 2 min gewählt werden.

11. Verfahren nach einem der vorhergehenden Ansprüche,
**dadurch gekennzeichnet, dass**
die aufgelötete Mischung kontrolliert mit Abkühlraten im Bereich von 10 K/min bis 100 K/min, vorzugsweise 30 K/min bis 70 K/min abgekühlt wird.

12. TiAl - Schaufel für eine Strömungsmaschine, insbesondere für ein Flugtriebwerk, vorzugsweise hergestellt mit dem Verfahren nach einem der vorhergehenden Ansprüche, mit einem TiAl - Grundkörper und einer Panzerung, die aus einem Gemisch aus Hartstoffen und Lotwerkstoff besteht, wobei das Lot ausgewählt wird aus der Gruppe, Ni - Basis - Lote, AMS47XX, AMS4775, AMS4776, AMS4777, AMS4778, AMS4779 und AMS4782 umfasst, und wobei der Hartstoff ausgewählt wird aus der Gruppe, die Aluminiumoxid, Bornitrid, kubisches Bornitrid, Siliziumkarbid und Titankarbid umfasst.

13. TiAl - Schaufel nach Anspruch 12,
**dadurch gekennzeichnet, dass**
die Mischung aus Hartstoff und Lot im Verhältnis von 1:1 bis 9:1 zwischen Hartstoffen und Lot vorliegt.

14. TiAl- Schaufel nach Anspruch 12 oder 13,
**dadurch gekennzeichnet, dass**
die Panzerung auf Dichtfins der TiAl - Schaufel aufgebracht ist.

## Claims

1. Method to armour TiAl blades of continuous flow machines, which comprises the steps:
- provision of a TiAl blade,
- application of a mixture of at least one hard material and at least one solder to the TiAl blade, wherein the solder is an Ni-based solder, **characterised by**:
- soldering of the mixture onto the TiAl blade by inductive heating.

2. Method according to claim 1,
**characterised in that**
the armour is applied to sealing fins of the TiAl blade.

3. Method according to one of the preceding claims,
**characterised in that**
the hard material is selected from the group which comprises aluminium oxide, boron nitride, cubic boron nitride, titanium nitride, silicon carbide, tungsten carbide and titanium carbide.

4. Method according to one of the preceding claims,
**characterised in that**
the mixture of hard material and solder is selected to be in a ratio of from 1:1 to 9:1 between hard materials and solder.

5. Method according to one of the preceding claims,
**characterised in that**
the mixture of solder and hard material is applied to the TiAl blade in a form which is selected from the group which comprises the application in the form of solder tape, of pre-sintered solder preforms and solder paste.

6. Method according to claim 5,
**characterised in that**
the solder preform or the solder tape are fixed to the TiAl blade before the soldering process by an adhesive or by welding, in particular spot welding, preferably resistance spot welding.

7. Method according to claim 5,
**characterised in that**
the solder paste additionally comprises an organic binder and is applied to the TiAl blade by processes for the application of fluid materials, in particular by painting or printing.

8. Method according to claim 7,
**characterised in that**
the organic binder is selected to have a proportion from 5% by weight to 30% by weight, in particular 10% by weight to 20% by weight of the total weight of the solder paste.

9. Method according to one of the preceding claims,
**characterised in that**
the soldering temperatures are selected to be in the range from 900°C to 1100°C, in particular 940°C to 1060°C, preferably in the range from 960°C to 1020°C.

10. Method according to one of the preceding claims,
**characterised in that**
the hold times with which the mixture of hard material and solder is held at soldering temperature are selected to be in the range from 30s to 10min, preferably in the range from 1min to 2min.

11. Method according to one of the preceding claims,
**characterised in that**
the soldered mixture is cooled in a controlled manner with cooling rates in the range from 10K/min to 100K/min, preferably 30K/min to 70K/min.

12. TiAl blade for a continuous flow machine, in particular for an aircraft engine, preferably produced using the method according to one of the preceding claims, having a TiAl base body and an armour which consists of a mixture of hard material and soldering material, wherein the solder is selected from the group which comprises Ni-based solders, AMS47XX, AMS4775, AMS4776, AMS4777, AMS4778, AMS4779 and AMS4782, and wherein the hard material is selected from the group which comprises aluminium oxide, boron nitride, cubic boron nitride, silicon carbide and titanium carbide.

13. TiAl blade according to claim 12,
**characterised in that**
the mixture of hard material and solder is present in a ratio from 1:1 to 9:1 between hard materials and solder.

14. TiAl blade according to claim 12 or 13,
**characterised in that**
the armour is applied to sealing fins of the TiAl blade.

## Revendications

1. Procédé de blindage d'aubes en TiAl pour des turbomachines, comprenant les étapes suivantes :
- préparation d'une aube en TiAl,
- application d'un mélange d'au moins une matière dure et d'au moins un métal d'apport sur l'aube en TiAl-, ledit métal d'apport étant un métal d'apport à base Ni, **caractérisée par** :
- le brasage du mélange sur l'aube en TiAl par chauffage par induction.

2. Procédé selon la revendication 1,
**caractérisé en ce que**
le blindage est appliqué sur des lames d'étanchéité de l'aube en TiAl.

3. Procédé selon l'une des revendications précédentes,
**caractérisé en ce que**
la matière dure est sélectionnée dans le groupe comprenant : oxyde d'aluminium, nitrate de bore, nitrate de bore cubique, nitrate de titane, carbure de silicium, carbure de tungstène et carbure de titane.

4. Procédé selon l'une des revendications précédentes,
**caractérisé en ce que**
le mélange de matière dure et de métal d'apport est sélectionné avec un rapport de 1:1 à 9:1 entre matières dures et métal d'apport.

5. Procédé selon l'une des revendications précédentes,
**caractérisé en ce que**
le mélange de métal d'apport et de matière dure est appliqué sur l'aube en TiAl sous une forme sélectionnée dans le groupe comprenant l'application sous forme de ruban de métal d'apport, de préformes en métal d'apport pré-frittées et de pâte de métal d'apport.

6. Procédé selon la revendication 5,
**caractérisé en ce que**
la préforme en métal d'apport ou le ruban de métal d'apport sont fixés avant le processus de brasage sur l'aube en TiAl au moyen d'un adhésif ou par soudage, en particulier par soudage par points, préférentiellement par soudage par points et par résistance.

7. Procédé selon la revendication 5,
**caractérisé en ce que**
la pâte à braser comprend en outre un liant organique et est appliquée sur l'aube en TiAl au moyen de processus d'application de matières ductiles, en particulier par peinture ou par impression.

8. Procédé selon la revendication 7,
**caractérisé en ce que**
le liant organique est sélectionné avec une proportion de 5 à 30 %, en particulier de 10 à 20 % du poids total de la pâte à braser.

9. Procédé selon l'une des revendications précédentes,
**caractérisé en ce que**
les températures de brasage sont sélectionnées dans une plage de 900 °C à 1100 °C, en particulier de 940 °C à 1060 °C, préférentiellement dans une plage de 960 °C à 1020 °C.

10. Procédé selon l'une des revendications précédentes,
**caractérisé en ce que**
les temps de maintien pendant lesquels le mélange de matière dure et métal d'apport est maintenu à température de brasage sont sélectionnés dans une plage de 30 s à 10 min, préférentiellement dans une plage de 1 min à 2 min.

11. Procédé selon l'une des revendication précédentes,
**caractérisé en ce que**
le mélange brasé est refroidi sous contrôle avec des temps de refroidissement compris entre 10 K/min et 100 K/min, préférentiellement entre 30 K/min et 70 K/min.

12. Aube en TiAl pour une turbomachine, en particulier pour un groupe motopropulseur d'avion, préférentiellement fabriquée au moyen du procédé selon l'une des revendications précédentes, avec un corps de base en TiAl et un blindage, constitué d'un mélange de matières dures et de matériau d'apport, le métal d'apport étant sélectionné dans le groupe comprenant des métaux d'apport à base Ni, AMS47XX, AMS4775, AMS4776, AMS4777, AMS4778, AMS4779 et AMS4782, et la matière dure étant sélectionnée dans le groupe comprenant : oxyde d'aluminium, nitrure de bore, nitrure de bore cubique, carbure de silicium et carbure de titane.

13. Aube en TiAl selon la revendication 12,
**caractérisée en ce que**
le mélange de matière dure et de métal d'apport est sélectionné avec un rapport de 1:1 à 9:1 entre matières dures et métal d'apport.

14. Aube en TiAl selon la revendication 12 ou 13,
**caractérisée en ce que**
le blindage est appliqué sur des lames d'étanchéité de l'aube en TiAl.
